# FASCICULE DE BREVET EUROPEEN

(11) **EP 0 577 713 B1**
(45) Date de publication et mention de la délivrance du brevet: **09.10.1996**
(21) Numéro de dépôt: 92908924.1
(22) Date de dépôt: 27.03.1992
(51) Int. Cl.: B04C 5/16, B04C 5/13, B04C 5/18, C02F 3/12

(54) **CYCLONE A DOUBLE EFFET D'EXTRACTION**
Zyklon mit Doppelextraktionseffekt
CYCLONE WITH DOUBLE ACTING EXTRACTION SYSTEM

(30) Priorité: 28.03.1991 FR 9103813
(43) Date de publication de la demande: 12.01.1994
(73) Titulaire: CODIEX, F-78141 Vélizy Cédex (FR)
(72) Inventeur: MERCIER, Dominique, F-92360 Meudon-la-Forêt (FR)
(74) Mandataire: Bruder, Michel
(86) Numéro de dépôt international: FR9200281
(87) Numéro de publication internationale: WO9217278

(56) Documents cités:
- DE-B- 1 289 516
- DE-C- 345 311
- DE-C- 587 474
- DE-C- 861 494
- DE-C- 967 474
- FR-A- 2 205 369
- GB-A- 960 342
- US-A- 2 768 745
- US-A- 3 802 570
- US-A- 4 681 685

## Description

La présente invention concerne un dispositif séparateur de particules à circulation de liquide, à double effet d'extraction destiné à séparer d'un liquide des particules en suspension dans celui-ci. La présente invention concerne également un procédé et un dispositif de purification d'un liquide à traiter par voie biologique utilisant un tel séparateur de particules.

On connaît différents types de séparateurs qui, pour la plupart, soumettent un fluide à traiter à un mouvement tourbillonnaire de type "vortex", dans une enceinte de forme généralement tronconique, dans laquelle les particules sont entraînées par le fluide en mouvement vers le sommet du tronc de cône situé à la base de l'appareil, pour être reçues ensuite dans une chambre de rétention. Les brevets FR-A-2 205 369 et US-A-3 802 570 décrivent de tels séparateurs dans lesquels le fluide en mouvement se situant à la périphérie externe du vortex est entraîné dans le bac de rétention.

Si les dispositifs séparateurs de ce type assurent la séparation par centrifugation des particules les plus importantes pour les amener en périphérie du tourbillon, leur extraction c'est-à-dire leur séparation d'un milieu liquide, n'est réalisée que partiellement, puisque le mouvement tourbillonnaire du liquide continue dans la chambre de rétention ce qui les empêche de précipiter facilement dans le fond de celle-ci. De tels dispositifs ne sont donc pas efficaces.

On connaît également par le brevet GB-A-960 342 un dispositif destiné à assurer la séparation et la classification de particules solides en suspension dans un gaz constitué d'une enceinte cylindro-conique ouverte à sa partie inférieure et alimentée en air sur trois niveaux, à savoir à sa partie supérieure, à sa partie inférieure et en sa partie médiane. Un tel dispositif ne comporte pas de plateau déflecteur disposé sous l'extrémité ouverte de l'enceinte et, en conséquence, n'assure pas une éjection centrifuge directe des particules si bien qu'il manque ainsi d'efficacité.

On connaît enfin par le brevet DE-A-967 474 un dispositif séparateur cylindrique dont la base se termine par un élément conique. Un tel dispositif ne permet pas une éjection centrifuge radiale des particules et ne favorise pas de plus la formation d'un écoulement tourbillonnaire secondaire central.

La présente invention a pour but de proposer un séparateur de particules qui permet d'extraire d'un liquide les particules solides amenées en périphérie du tourbillon et de les faire se déposer ensuite dans une chambre de rétention, tout en évitant de mélanger le liquide traité avec les boues constituant les résidus du traitement antérieur du liquide.

La présente invention a également pour but un séparateur permettant de créer, au centre d'un mouvement tourbillonnaire principal descendant, un mouvement tourbillonnaire secondaire ascendant qui assure une seconde séparation centrifuge de particules solides restant en suspension dans le liquide après la première séparation, cette seconde séparation étant suivie d'une extraction qui est assurée par le mouvement tourbillonnaire principal.

La présente invention a également pour but de proposer des moyens permettant de faciliter la formation du tourbillon secondaire ascendant.
La présente invention a ainsi pour objet un dispositif séparateur de particules contenues dans un liquide à traiter, comportant une enceinte cylindrique ouverte à son extrémité inférieure, ou base, cette enceinte étant pourvue de moyens d'injection uniques du liquide à traiter, orientés tangentiellement par rapport à sa paroi interne, de façon à créer un écoulement tourbillonnaire forcé du liquide dans l'enceinte entraînant les particules contenues dans le liquide à traiter, des moyens déflecteurs disposés à la base de l'enceinte et destinés à produire un écoulement tourbillonnaire central ascendant du liquide traité, un tube de sortie axial, disposé à la partie supérieure de l'enceinte et s'ouvrant en aval des moyens d'injection, prolongés vers le bas par un élément de régulation de flux formé, d'amont en aval, d'une partie tronconique évasée vers le bas et prolongée par une partie cylindrique d'un diamètre extérieur inférieur au diamètre interne de l'enceinte cylindrique, de façon à créer entre-eux une veine d'écoulement de section annulaire, caractérisé en ce que les moyens déflecteurs sont constitués d'un plateau plan concentrique à l'enceinte dont la face inférieure est de diamètre au moins égal au diamètre interne de celle-ci et dont la face supérieure est disposée à proximité de l'extrémité ouverte inférieure de l'enceinte, de façon à former entre-elles un espace annulaire ouvert sur l'extérieur, afin de permettre une éjection centrifuge directe des particules contenue dans le liquide, le plateau comportant des moyens de réglage de sa position longitudinale permettant de modifier et régler la hauteur dudit espace annulaire, une chambre de rétention, en communication exclusive avec l'enceinte lorsque le séparateur est en fonctionnement, entoure la base de l'enceinte et le plateau plan, de façon à recueillir les particules éjectées au travers dudit espace annulaire.

Dans un mode de mise en oeuvre de l'invention on améliore la qualité de l'écoulement du tourbillon principal en donnant à l'espace annulaire compris entre la paroi interne de l'enceinte cylindrique et la paroi externe de l'élément de régulation de flux une largeur égale sensiblement au tiers du rayon interne de l'enceinte cylindrique.

La demanderesse a également constaté que la stabilité des écoulements obtenus était encore améliorée lorsque la section de passage des moyens d'injection du liquide à traiter était égale à celle dudit espace annulaire.

Par ailleurs la demanderesse a établi que, contrairement aux dispositifs de l'état antérieur de la technique, il était possible d'empêcher la circulation du fluide à l'intérieur de la chambre de rétention en utilisant un plateau déflecteur d'un diamètre supérieur au diamétre interne de l'enceinte cylindrique, ce plateau déflecteur étant disposé sous l'extrémité inférieure de l'enceinte cylindrique, si bien que la composante verticale du fluide en mouvement est déviée par le déflecteur, ce qui empêche toute circulation de fluide à l'intérieur de la chambre de rétention. Par contre les particules, en raison de leur masse, sont chassées vers l'extérieur par la force centrifuge si bien qu'elles pénétrent dans la chambre de rétention pour s'y déposer ensuite.

Dans une autre variante de mise en oeuvre de l'invention, les moyens d'injection sont constitués d'un tube dont l'axe est perpendiculaire à la direction des génératrices de l'enceinte cylindrique et qui est fixé, par exemple par soudage, sur celle-ci. Afin de rendre la trajectoire du fluide plus tangentielle, seule la moitié de la surface de la paroi de celle-ci correspondant à l'orifice du tube d'injection est percée, à savoir la moitié située entre l'axe de symétrie vertical dudit orifice et la paroi externe de l'enceinte.

Dans une variante de l'invention l'élément déflecteur est constitué d'un plateau circulaire percé d'une série de canaux faisant communiquer sa face inférieure avec sa face supérieure, les projections des axes de ces canaux sur le plateau déflecteur, à la sortie desdits canaux, sont orientés de façon tangentielle, c'est-à-dire perpendiculairement à chaque rayon issu du centre du plateau et aboutissant au centre de l'orifice de sortie, ces canaux étant dirigés, lorsque l'on va de l'intérieur vers l'extérieur, dans le même sens que le canal d'injection, de façon à augmenter l'écoulement tourbillonnaire produit et la formation de l'écoulement tourbillonnaire secondaire central. D'autre part les axes de ces canaux forment, avec la surface supérieure du plateau déflecteur, un angle d'incidence faible, de préférence inférieur à 30°. Les entrées de ces canaux sont reliées par une canalisation à une alimentation en liquide sous pression extérieure, de préférence avec le même liquide que celui à traiter. Le présent mode de mise en oeuvre permet, d'aider à l'amorçage de l'écoulement tourbillonnaire central, lorsque, par exemple, le liquide à traiter est injecté sous une pression si faible qu'elle aurait été insuffisante pour permettre à elle seule l'établissement de celui-ci. Une fois ce dernier établi on peut, dans certains cas, supprimer l'alimentation en liquide du plateau déflecteur qui, dès lors, n'est plus nécessaire à l'entretien du tourbillon.

On sait également que l'épuration des eaux par voie biologique peut être réalisée par des procédés de bio-augmentation qui consistent à enrichir un milieu pollué à l'aide de micro-organismes spécifiques, destinés à détruire la pollution. Pour se développer, on sait que de tels micro-organismes ont besoin d'être fixés, par exemple dans des supports minéraux. De tels supports chargés de leurs micro-organismes vont au fond de la réserve d'eau à traiter, d'où les micro-organismes, se développant dans les cavités poreuses des supports, s'échappent progressivement, pour dégrader la pollution environnante. Or, d'une part, de tels micro-organismes craignent habituellement la lumière et, d'autre part, ils voient leur efficacité diminuer lorsqu'on les fait agir dans des eaux soumises à des turbulences ou à des circulations forcées par exemple à l'aide de pompes. A l'heure actuelle, un tel système d'épuration par voie biologique peut, en conséquence, être difficilement utilisé pour maintenir dans un état de non pollution, des bassins étanches de faible profondeur, tels que ceux, par exemple, des fontaines publiques.

La présente invention a donc pour but de procurer un procédé et un dispositif permettant de mettre en oeuvre le dispositif de séparation de particules suivant l'invention pour assurer la purification d'un liquide par voie biologique en vue d'assurer, notamment, l'entretien de bassins du type précité, par l'enrichissement du milieu pollué à l'aide de micro-organismes spécifiques fixés sur un support.

La présente invention a donc également pour objet un procédé de purification d'un liquide par voie biologique caractérisé en ce qu'il consiste à alimenter en liquide à purifier une cuve de contact, ou réacteur biologique, contenant des micro-organismes fixés sur un support, à soutirer ce liquide de la cuve de contact et à l'injecter sous pression dans un dispositif séparateur de particules, à séparer dans celui-ci les particules et les supports de micro-organismes contenus dans le liquide, à les recueillir dans une chambre de rétention, à les réinjecter dans la cuve de contact, et à extraire le liquide traité et purifié du séparateur.

La présente invention a également pour objet un dispositif destiné à assurer la purification d'un liquide par voie biologique du type mettant en oeuvre des micro-organismes fixés sur un support, caractérisé en ce qu'il comprend une cuve de contact, ou réacteur biologique, contenant lesdits micro-organismes, dans laquelle débouche une canalisation d'arrivée du liquide à traiter et/ou purifier, cette cuve de contact comportant une canalisation de sortie et des moyens d'injection propres à pulser, à l'intérieur d'un dispositif de séparations de particules, le liquide à traiter et/ou à purifier soutiré de la cuve de contact, la chambre de rétention dudit dispositif séparateur de particules comportant des moyens permettant d'envoyer dans la cuve de contact les particules et les supports contenant les micro-organismes, séparés du liquide au cours du fonctionnement du dispositif séparateur.

Dans un mode de mise en oeuvre particulièrement intéressant du séparateur suivant l'invention, celui-ci permet d'assurer la séparation de supports de micro-organismes contenus dans un liquide pour les injecter dans une cuve, ou "réacteur" où ils effectuent des réactions de décomposition, les micro-organismes en excès étant mélangés à l'eau traitée et celle-ci étant évacuée vers un bassin ou un circuit d'eau, les micro-organismes continuant à réaliser leur action de dépollution.

On décrira ci-après, à titre d'exemples non limitatifs, des formes d'exécution de la présente invention, en référence au dessin annexé sur lequel :

La figure 1 est une vue en coupe verticale et longitudinale d'un dispositif séparateur représentant un premier mode de mise en oeuvre de l'invention.

La figure 2 est une vue partielle en coupe verticale et longitudinale de la partie supérieure d'un dispositif séparateur suivant l'invention.

La figure 3 est une vue en coupe transversale suivant la ligne IV-IV de la figure 2.

La figure 3a est une vue partielle en coupe transversale, à plus grande échelle, d'une variante du mode de mise en oeuvre représenté sur la figure 3.

La figure 3b est une vue partielle en coupe, à plus grande échelle, du dispositif de la figure 3a, suivant la ligne IVb-IVb de celle-ci.

La figure 4 est une vue de dessus, à plus grande échelle, du plateau déflecteur utilisé dans le mode de mise en oeuvre représenté sur la figure 8.

La figure 5 est une vue de dessus partielle, à plus grande échelle, du plateau déflecteur représenté sur la figure 4.

La figure 6 est une vue partielle en coupe verticale suivant la ligne VII-VII de la figure 5.

La figure 7 est une vue de dessus partielle d'une variante de mise en oeuvre du plateau déflecteur représenté sur la figure 5.

La figure 8 est une vue partielle, en coupe verticale et longitudinale, d'une variante de réalisation du dispositif séparateur suivant l'invention.

La figure 9 est une vue en élévation montrant une application du dispositif séparateur de particules suivant l'invention.

Les figures 10 à 12 sont des vues schématiques illustrant trois variantes de mise en oeuvre d'un procédé et d'un dispositif de traitement des eaux par voie biologique suivant l'invention.

La figure 13 est un schéma montrant les proportions respectives préférées des différents éléments constitutifs du dispositif séparateur de particules suivant l'invention.

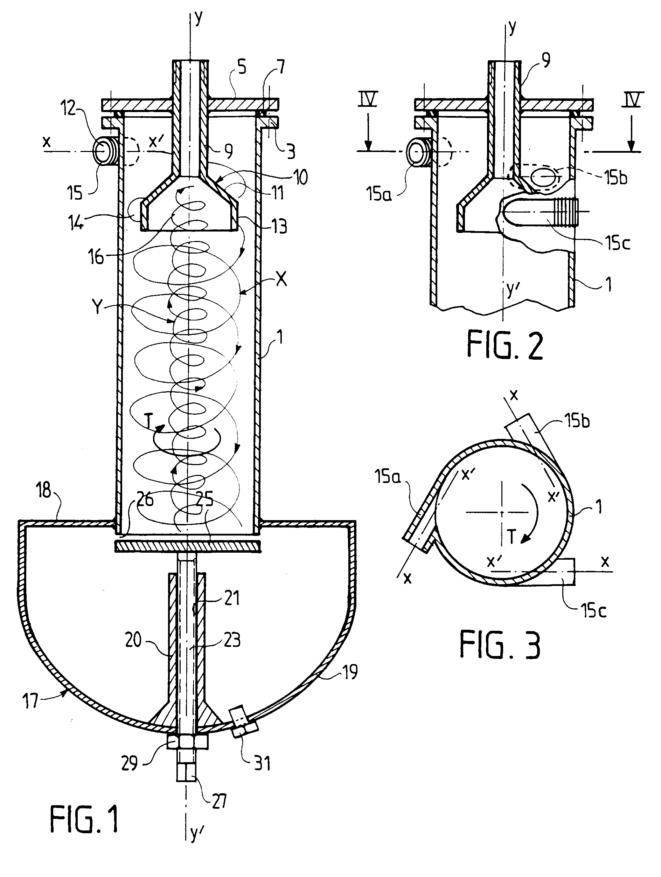

Sur la figure 1 le dispositif séparateur de particules suivant l'invention comprend une enceinte 1, constituée d'un tube métallique cylindrique, d'axe longitudinal yy', habituellement vertical mais qui peut également, le cas échéant, être incliné, cette enceinte étant ouverte à son extrémité inférieure et comportant à son extrémité supérieure une bride annulaire 3. Cette dernière reçoit un couvercle 5 constitué d'une plaque circulaire fixée sur la bride 3, par exemple par une série de boulons (non représentés sur le dessin), avec interposition d'un joint d'étanchéité 7. Le couvercle 5 est traversé par un tube coaxial 9, fixé par exemple par soudage sur celui-ci, et dont la base se termine par un élément régulateur de flux 10 constitué d'une partie tronconique 11 de faible épaisseur évasée vers le bas, qui est suivie d'une partie cylindrique 13, de plus faible diamètre que celui de la paroi interne de l'enceinte 1, de façon à former entre elles un passage annulaire 14. La partie supérieure de l'enceinte 1 reçoit une conduite d'injection 15, qui est fixée sur celle-ci par soudage, et dont le passage interne 12 débouche dans l'enceinte 1. L'axe xx' de cette conduite 15 est disposé transversalement par rapport à l'axe longitudinal yy' de l'enceinte 1, et tangentiellement par rapport à la surface interne de celle-ci. La partie externe de cette conduite possède des moyens de connexion, tel que par exemple un filetage, permettant de la relier à une source de fluide à traiter.

Une chambre de rétention 17, constituée d'un réservoir semi-sphérique 19, se raccorde à la base de l'enceinte 1 par un plafond plan horizontal 18. Le fond de la chambre de rétention 17 reçoit, sur sa face interne, un support cylindrique 20, d'axe longitudinal yy', dont la base est évasée afin de permettre une bonne fixation sur la chambre de rétention 17. Le support 20 est percé d'un trou axial fileté 21, traversant la base de la chambre de rétention 17. Ce trou 21 reçoit une vis 23 dont l'extrémité supérieure est solidaire d'un plateau déflecteur circulaire 25, perpendiculaire à l'axe longitudinal yy'et d'un diamètre voisin du diamètre extérieur de l'enceinte 1, si bien qu'il est en mesure d'obturer complétement l'orifice inférieur de celle-ci. L'extrémité inférieure de la vis 23 dépasse sous la chambre de rétention 17 et comporte un carré de commande 27 destiné à son entraînement en rotation. Il est ainsi possible, en vissant plus ou moins la vis 23, de positionner longitudinalement, c'est-à-dire suivant l'axe yy' de l'enceinte 1, le plateau déflecteur 25 par rapport à la base de l'enceinte 1 de façon à régler la section de passage de l'espace annulaire 26 existant entre la face supérieure du plateau déflecteur 25 et le bord inférieur de l'enceinte 1. Un contre-écrou 29 disposé sur la vis 23 permet d'assurer l'immobilisation du plateau déflecteur 25 par rapport à la chambre de rétention 17, et donc par rapport à la base de l'enceinte 1, dans une position donnée prédéterminée.

Le fond de la chambre de rétention 17 comporte des moyens de vidange 31, destinés à extraire les boues qui s'accumulent pendant le fonctionnement du dispositif, ces moyens de vidange étant constitués, par exemple, d'un simple bouchon vissé.

Le fonctionnement de l'appareil suivant l'invention est particulièrement intéressant en ce qu'il permet de réaliser une séparation centrifuge à double effet.

Ainsi en raison de l'orientation tangentielle de la conduite d'injection 15, le fluide pénétrant dans l'enceinte 1 subit, de façon connue, un mouvement tournant qui est canalisé par la partie tronconique 11 de l'élément régulateur de flux 10, puis par la partie cylindrique 13 de celui-ci pour former un écoulement tourbillonnaire forcé descendant X qui subit une déflexion sur le plateau déflecteur 25 et forme ensuite une colonne tourbillonnaire montante axiale Y, dirigée à contre-courant à l'intérieur de l'écoulement tourbillonnaire descendant X, et qui s'engage dans la cavité interne 16 de l'élément régulateur de flux 10 pour être expulsée à l'extérieur de l'appareil par le tube 9. Les particules solides contenues dans le liquide injecté à traiter sont séparées de celui-ci par la force centrifuge du mouvement tourbillonnaire forcé et, lorsqu'elles arrivent face à l'espace annulaire 26, elles sont extraites de celui-ci et éjectées dans la chambre de rétention 17 où elles vont ensuite se déposer. On notera que cette déposition est rendue possible en raison de ce que le liquide en mouvement dans l'enceinte 1 n'est pas entraîné dans la chambre de rétention 17 parce qu'il n'existe aucune communication, dans le sens vertical, entre l'enceinte 1 et ladite chambre 17. Il y a donc une séparation de fait entre le liquide en cours de traitement dans l'enceinte 1 et les bornes qui se forment dans la chambre de rétention 17, ce qui est particulièrement intéressant sur le plan de l'hygiène.

Après la déflexion du liquide en mouvement sur le déflecteur 25, la colonne montante tourbillonnaire centrale Y exerce sur les fines particules restant en suspension dans le liquide une action centrifuge si bien qu'elles sont entraînées dans la colonne externe X qui les extrait ainsi et les entraîne dans son propre mouvement pour les éliminer par l'orifice annulaire 26.

L'appareil suivant l'invention possède ainsi, grâce à cette double séparation centrifuge, un rendement particulièrement remarquable.

Le fait, suivant l'invention, de pouvoir régler la section du passage 26 offerte aux particules se dirigeant vers la chambre de rétention 17, et de pouvoir modifier la position longitudinale de la base du tourbillon central Y formé, permet d'élargir le domaine de fonctionnement du dispositif de séparation de particules suivant l'invention et d'utiliser, par exemple, un même appareil avec des liquides et des particules de paramètres physiques très différents. Dans tous les cas le dispositif suivant l'invention pourra être adapté par l'utilisateur, par le simple réglage de la position longitudinale de son plateau déflecteur 25, aux multiples conditions de fonctionnement rencontrées, pour qu'il fournisse un résultat optimal.

Le dispositif suivant l'invention permet également, au cours de son lancement, de réaliser un positionnement donné du plateau déflecteur 25 particulièrement favorable à l'établissement du mouvement tourbillonnaire forcé, puis, après la formation de celui-ci, de réaliser un nouveau positionnement plus favorable aux conditions de séparation souhaitées. Les différents positionnements du plateau déflecteur 25 peuvent, bien entendu, être commandés par des moyens automatisés.

Afin, notamment, de favoriser, au démarrage, la formation du tourbillon et l'établissement du mouvement tourbillonnaire axial ascendant Y du liquide traité, on pourra faire appel à plusieurs conduites d'injection afin de faire se conjuguer les efforts tangentiels appliqués au liquide à traiter.

Dans la variante de mise en oeuvre représentée sur les figures 2 et 3 on utilise trois conduites d'injection respectivement 15a,15b et 15c disposées angulairement à 120° les unes par rapport aux autres, et dont les axes xx' sont disposés tangentiellement par rapport à la surface interne du tube 1. Les conduites d'injection sont disposées sur trois sections droites, situées les unes au-dessous des autres, et l'on rencontre ainsi successivement du haut vers le bas les conduites d'injection 15a, 15b, et 15c.

Dans la variante de mise en oeuvre représentée sur la figure 3a l'enceinte 1 comporte une conduite d'injection 15 du liquide à traiter qui est disposée de façon telle que l'une de ses génératrices est tangente à une section droite de l'enceinte 1. Le canal interne 12 de cette conduite d'injection 15 est en communication avec l'intérieur de l'enceinte 1 par un orifice 12a qui est percé dans la paroi de celle-ci. Comme représenté sur les figures 3a et 3b seule la moitié de la surface de l'enceinte située face au canal interne 12 est percée. Cette disposition permet de privilégier les filets de liquide tangents à la paroi interne de l'enceinte 1 ce qui améliore la formation du mouvement tourbillonnaire forcé.

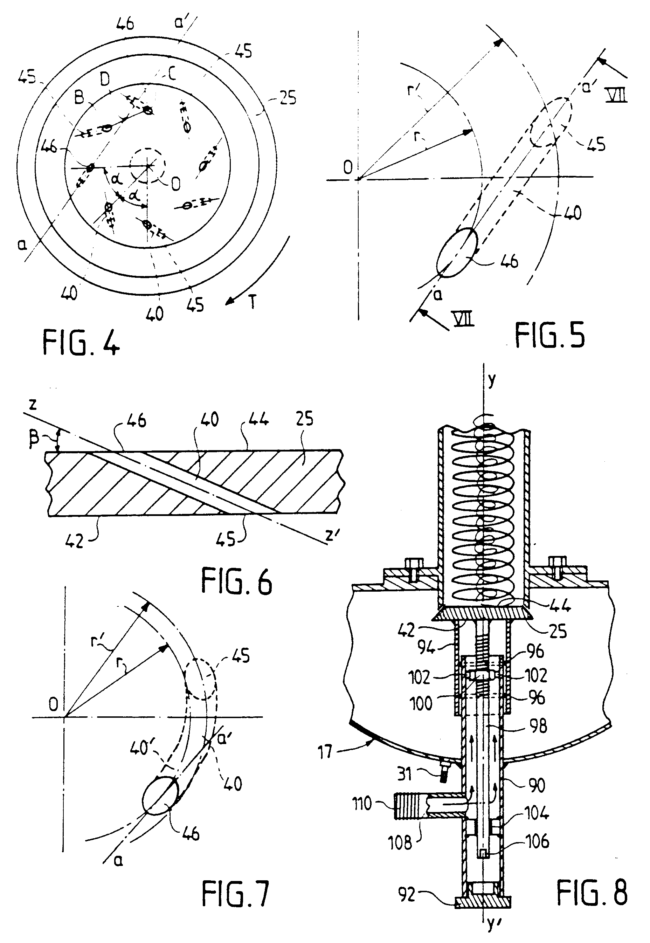

Dans une variante intéressante de l'invention, le plateau est traversé d'une série de canaux, alimentés en liquide sous pression, qui sont orientés tangentiellement par rapport au plateau de façon à créer des jets de liquide aidant à la formation du mouvement tourbillonnaire central ascendant Y. Ainsi sur les figures 4 à 8, le plateau déflecteur 25 est traversé par une série de plusieurs canaux 40, par exemple au nombre de huit, partant de la périphérie de la face inférieure 42 du plateau déflecteur 25, où ils forment des orifices d'entrée 45, pour déboucher sur la face supérieure 44 de celui-ci, par des orifices de sortie 46. Les orifices de sortie 46 sont répartis de façon régulière sur un cercle centré au centre O du plateau 25 et de rayon r, de façon qu'un angle au centre α séparant deux orifices de sortie respectifs 46 soit égal à 45°. Ces canaux 40 sont orientés de façon telle que leur axe de symétrie zz' forme, comme montré sur la figure 7, un angle β avec la surface supérieure 44 du plateau déflecteur 25, de préférence inférieur à 30°. De plus, comme montré sur la figure 4, la projection orthogonale aa' d'un axe de symétrie zz' d'un canal 40, en sortie d'un orifice 46, passe par le milieu D d'un segment BC joignant les centres B et C de deux orifices de sortie 46 respectifs suivants (en allant dans le sens T du tourbillon ascendant Y). En effet la demanderesse a établi que cette orientation des canaux 40 en sortie du plateau 25 permettait un entraînement optimal du mouvement tourbillonnaire interne ascendant Y.

Bien entendu, comme représenté sur la figure 7, les canaux 40 peuvent être en nombre différent et de forme courbe, de façon à diminuer le rayon r' du cercle sur lequel sont répartis les orifices d'entrée 45 de ces canaux 40. Cependant, dans cette forme de mise en oeuvre, et comme précédemment, les canaux 40 possédent préférablement, en sortie, une partie rectiligne 40' dont la projection aa' de l'axe de symétrie zz' sur la face supérieure 44 du plateau déflecteur 25 posséde les mêmes propriétés géométriques que décrit dans la réalisation précédente.

Sur la figure 8 on a représenté un dispositif permettant d'assurer à la fois une alimentation en liquide du plateau déflecteur 25 et le déplacement longitudinal de celui-ci, de façon que ce déplacement puisse être réalisé, en cours de fonctionnement, sans créer de fuites de liquide à l'extérieur du dispositif. A cet effet le fond de la chambre de rétention 17 est traversé par un tube d'axe yy' 90, fixé par exemple sur celle-ci par soudage, dont l'extrémité inférieure est fermée par un bouchon obturateur 92. La face inférieure 42 du plateau déflecteur 25 reçoit, également par soudage, un tube 94 d'axe yy', de diamètre intérieur supérieur au diamètre extérieur du tube 90, de façon à permettre un coulissement axial de ces deux tubes l'un dans l'autre le volume interne du tube 94 étant en communication avec l'orifice d'entrée 45 des canaux 40, deux joints toriques 96 étant disposés dans des rainures périphériques prévues dans l'un de ces deux tubes de façon à assurer entre eux une étanchéité au fluide. Une vis axiale 98 est fixée, par soudage, sur la face inférieure 42 du plateau déflecteur 25 et vient se visser dans un écrou fileté 100, maintenu par des brides 102 sur la paroi interne du tube 90, de façon à permettre une libre circulation du liquide entre la paroi interne de celui-ci et l'écrou 100. Le tube 90 comporte une alimentation en liquide sous pression constituée d'un tube 108 comportant des moyens 110 permettant sa connexion à une alimentation en liquide sous pression. Des moyens d'étanchéité 104 sont prévus entre le tube 90 et la vis 98, en aval des moyens d'alimentation en liquide sous pression 108. La partie inférieure de la vis 98 se termine par un carré de commande 106.

Ainsi, après avoir ôté le bouchon obturateur 92, on peut commander la rotation de la vis 98 en agissant sur le carré 106. Sous cette action, la vis 98 se visse ou se dévisse dans l'écrou 100, ce qui entraîne le déplacement longitudinal du plateau déflecteur 25 et du tube 94 solidaire de celui-ci, qui se déplace sur la surface externe du tube 90, en conservant l'étanchéité par rapport à l'extérieur de ces tubes.

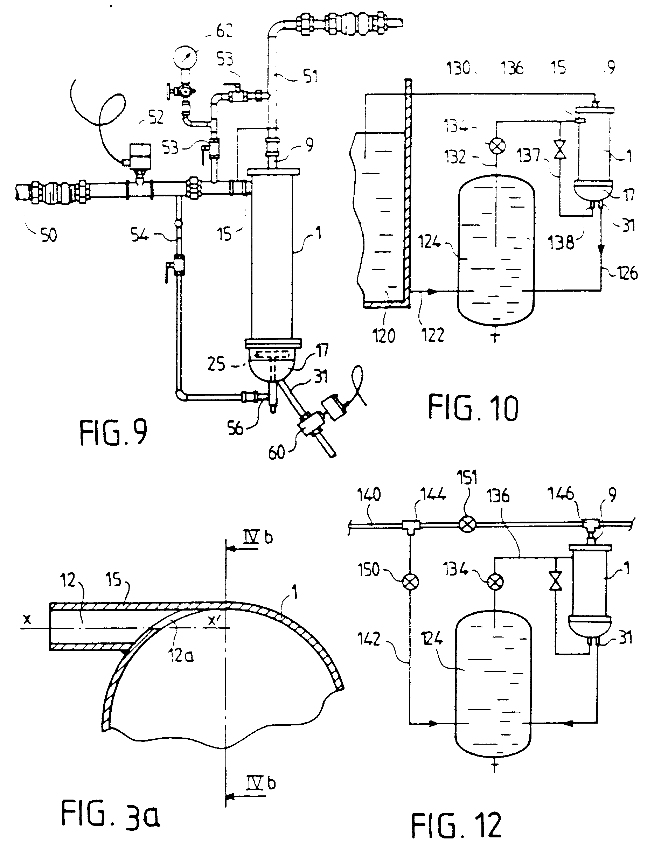

Le dispositif séparateur de particules suivant l'invention peut être interposé, comme représenté sur la figure 9, dans un réseau de distribution d'eau. Pour ce faire, la conduite d'injection de l'eau à traiter 15 du dispositif séparateur est reliée à une canalisation d'arrivée d'eau 50, avec interposition d'une électrovanne de commande 52, et le tube 9 de sortie de l'eau traitée est relié à une canalisation 51 assurant la continuité du réseau de distribution d'eau. Une dérivation 54 relie l'aval de l'électrovanne 52 aux moyens d'alimentation en eau du plateau déflecteur 25. Un manomètre différentiel 62 indique la différence de pression existant entre l'eau à traiter arrivant par la canalisation 50 et l'eau traitée sortant par la canalisation 51, de façon à permettre un réglage de l'intensité du mouvement tourbillonnaire en fonction de la nature du fluide à traiter et des particules contenues dans celui-ci, par exemple en agissant sur une vanne de commande 53. Une électrovanne 60 assure l'évacuation des boues qui s'accumulent dans le fond de la chambre de rétention 17 au cours du fonctionnement du dispositif.

La demanderesse a établi que, notamment dans le domaine du traitement des eaux, une efficacité optimale du dispositif séparateur de particules était obtenue lorsque des proportions bien déterminées de ses différents éléments constitutifs étaient respectées. A titre d'exemple les proportions sont indiquées dans le tableau ci-après, en fonction du diamètre interne d de l'enceinte 1, et en regard du schéma de la figure 14.

| | |
|---|---|
| Longueur de l'enceinte 1 | L = 5d |
| Diamètre de la conduite d'injection 15 | d1 = d/4 |
| Diamètre du tube de sortie 9 | d2 = d/4 |
| Distance de la petite base du tronc de cône 11 de l'élément régulateur de flux à la partie supérieure de l'enceinte 1 | e = d/2 |
| Diamètre de la partie cylindrique 13 de l'élément régulateur de flux 10 | f = d-20mm |
| Course longitudinale du plateau déflecteur 25 | c = 30mm |

Le dispositif suivant l'invention peut également être utilisé pour réaliser l'épuration des eaux par voie biologique, notamment lorsque l'on fait appel à un procédé de biofixation consistant à mettre en contact, avec l'eau à traiter, des micro-organismes préalablement fixés sur des supports, par exemple minéraux, ces micro-organismes se développant dans les cavités poreuses desdits supports et s'échappant progressivement pour détruire la pollution environnante.

Ainsi, dans le mode de mise en oeuvre représenté sur la figure 10, on se propose d'assurer l'épuration, par voie biologique, de l'eau contenue dans un bassin 120. A cet effet on relie, par une canalisation 122, le fond de celui-ci au fond d'une cuve "réacteur", ou cuve de contact 124, contenant des micro-organismes, de nature appropriée au type de traitement à réaliser, fixés sur des supports, par exemple minéraux, le fond de cette même cuve 124 étant également réuni, au moyen d'une canalisation 126, à l'orifice de purge 31 d'une chambre de rétention 17 d'un séparateur de particules suivant l'invention. Le tube de sortie 9 de ce séparateur de particules est relié, par une canalisation 130, à la partie supérieure du bassin 120 dans lequel on souhaite entretenir un état de non-pollution. Un tube de soutirage 132 plonge dans la cuve de contact 124, par la partie supérieure de celle-ci, pour en extraire l'eau au moyen d'une pompe 134, éventuellement commandée par des moyens de temporisation, et l'injecter, par une canalisation 136, dans la conduite d'injection 15 du séparateur de particules. Dans une variante de mise en oeuvre, une dérivation 137 relie la canalisation 136 à des moyens d'alimentation en eau 138 du plateau déflecteur 25.

Ainsi, à la mise en route de la pompe 134, celle-ci injecte dans le séparateur de particules, par la canalisation 136, une quantité d'eau à traiter contenant des micro-organismes fixés sur des supports, ainsi qu'éventuellement d'autres particules, et le tourbillon produit dans le séparateur permet de recueillir, dans la chambre de rétention 17, à la base de celui-ci, à la fois les particules contenues dans l'eau et les supports contenant les micro-organismes, qui sont ensuite renvoyés par la canalisation 126 dans la cuve de contact 124. Dans cette dernière les micro-organismes ont toute possibilité d'agir de façon efficace puisqu'ils sont, d'une part, à l'abri de la lumière et, d'autre part, à l'abri des courants violents provoqués par les pompes. L'eau traitée, chargée de l'excès de micro-organismes, est renvoyée, par le tube de sortie 9 du séparateur et la canalisation 130, dans le bassin 120. Ainsi le présent procédé et le dispositif de traitement, par voie biologique, de l'eau contenue par exemple dans un bassin, permettent une action optimale des micro-organismes utilisés, là où les dispositifs de la technique antérieure se révélaient totalement inefficaces.

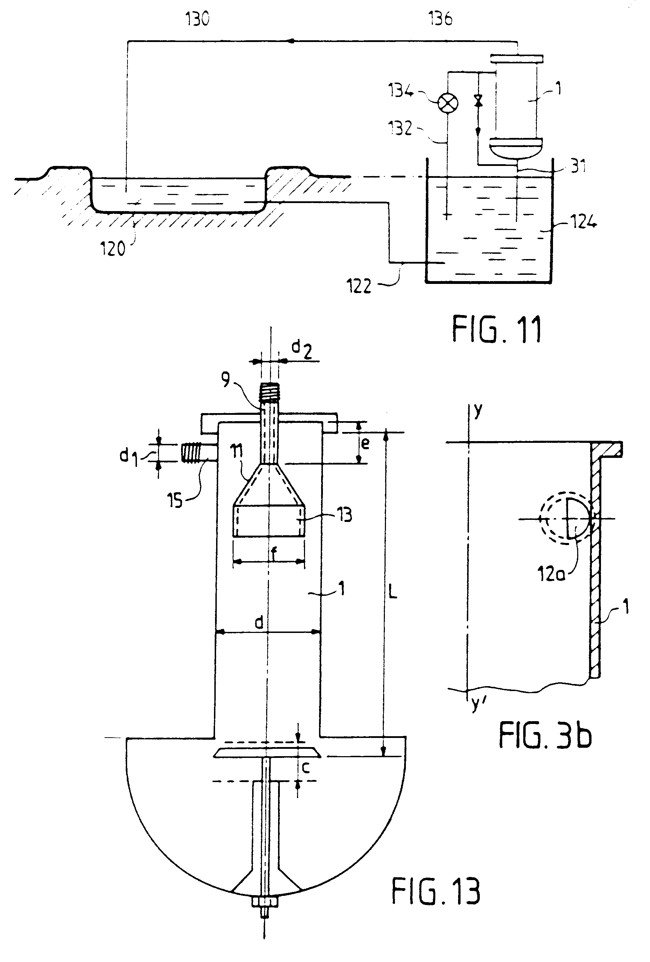

On pourrait également, comme représenté sur la figure 11, utiliser une cuve de contact 124, ouverte à l'air libre à sa partie supérieure, le niveau de celle-ci étant alors assuré avec un bassin 120 que l'on souhaite entretenir dans un état de non pollution par le simple principe des vases communiquants. Bien évidemment on pourrait utiliser une mise à niveau par d'autres moyens tels que des dispositifs de mesure de niveau reliés à des systèmes de pompe ou d'électrovanne.

Bien entendu le procédé et le dispositif de purification par voie biologique suivant l'invention ne se limitent pas à des utilisations dans le domaine des fosses, des bassins ou autres types de moyens de stockage.

On peut également, comme représenté sur la figure 12, mettre en oeuvre la présente invention pour assurer la purification d'un réseau de distribution d'eau. A cet effet on dispose, en dérivation sur une conduite 140 d'un réseau de distribution d'eau, une cuve de contact 124, dont la base est reliée, par une canalisation 142, à une prise d'eau amont 144 avec interposition d'une vanne de contrôle 150. La partie aval de la prise d'eau 144 est reliée, avec interposition d'une vanne de contrôle 151, à la sortie du tube 9 d'un séparateur de particules, par une prise d'eau 146, pour continuer ensuite vers le réseau d'eau. La cuve de contact 124 est reliée au dispositif séparateur de particules de la même façon que dans les modes de mise en oeuvre représentés sur les figures 10 et 11. Le présent mode de mise en oeuvre de l'invention fonctionne de façon identique à celui décrit précédemment et permet d'assurer un traitement, à la fois physique et biologique, d'un pourcentage donné du débit s'écoulant dans la canalisation 140, pourcentage que l'on peut faire varier au moyen des vannes de contrôle de débit 150 et 151.

On peut enfin utiliser les moyens d'alimentation en fluide à traiter du plateau déflecteur 25 pour introduire dans l'enceinte 1 des produits de traitement quelconques qui, en raison du brassage résultant dans celle-ci de la formation des écoulements tourbillonnaires, seront mélangés de façon particulièrement efficace au liquide à traiter.

## Revendications

1. Dispositif séparateur de particules contenues dans un liquide à traiter, comportant une enceinte cylindrique (1) ouverte à son extrémité inférieure, ou base, cette enceinte (1) étant pourvue de moyens d'injection uniques (15) du liquide à traiter, orientés tangentiellement par rapport à sa paroi interne, de façon à créer un écoulement tourbillonnaire forcé du liquide dans l'enceinte (1) entraînant les particules contenues dans le liquide à traiter, des moyens déflecteurs (25) disposés à la base de l'enceinte (1) et destinés à produire un écoulement tourbillonnaire central ascendant du liquide traité, un tube de sortie axial (9), disposé à la partie supérieure de l'enceinte (1) et s'ouvrant en aval des moyens d'injection (15), prolongés vers le bas par un élément de régulation de flux (10) formé, d'amont en aval, d'une partie tronconique (11) évasée vers le bas et prolongée par une partie cylindrique (13) d'un diamètre extérieur inférieur au diamètre interne de l'enceinte cylindrique (1), de façon à créer entre-eux une veine d'écoulement (14) de section annulaire, caractérisé en ce que les moyens déflecteurs sont constitués d'un plateau plan (25) concentrique à l'enceinte (1), dont la face inférieure est de diamètre au moins égal au diamètre interne de celle-ci et dont la face supérieure est disposée à proximité de l'extrémité ouverte inférieure de l'enceinte (1), de façon à former entre-elles un espace annulaire ouvert sur l'extérieur, afin de permettre une éjection centrifuge directe des particules contenue dans le liquide, le plateau (25) comportant des moyens de réglage de sa position longitudinale permettant de modifier et régler la hauteur dudit espace annulaire, une chambre de rétention (17), en communication exclusive avec l'enceinte (1) lorsque le séparateur est en fonctionnement, entoure la base de l'enceinte (1) et le plateau plan (25), de façon à recueillir les particules éjectées au travers dudit espace annulaire.

2. Dispositif suivant la revendication 1 caractérisé en ce que le diamètre du plateau (25) est supérieur au diamètre interne de l'enceinte (1).

3. Dispositif suivant l'une des revendications 1 et 2 caractérisé en ce que la largeur de l'espace annulaire compris entre la paroi interne de l'enceinte cylindrique (1) et la paroi externe de la partie cylindrique (13) de l'élément de régulation de flux (10) est de l'ordre du tiers du rayon interne de l'enceinte cylindrique (1).

4. Dispositif suivant l'une des revendications précédentes caractérisé en ce que le sommet de la partie tronconique (11) de l'élément de régulation de flux (10) se situe sensiblement au niveau, dans le sens longitudinal (yy'), de la partie la plus en aval de l'orifice de sortie des moyens d'injection (15).

5. Dispositif suivant l'une des revendications précédentes caractérisé en ce que les sections de passage des moyens d'injection (15) et de la veine d'écoulement de section annulaire (14) sont identiques.

6. Dispositif suivant l'une des revendications précédentes caractérisé en ce que les moyens d'injection sont constitués d'un élément tubulaire (15) solidaire de l'enceinte cylindrique (1), dont le conduit interne (12) débouche dans l'enceinte par un orifice (12a), situé dans le prolongement d'une moitié de conduit interne (12) comprise entre l'axe de symétrie dudit conduit et la partie la plus à l'extérieur de celui-ci.

7. Dispositif suivant l'une quelconque des revendications précédentes caractérisé en ce que le plateau déflecteur (25) est traversé d'au moins un canal (40) comportant un orifice d'entrée (45) s'ouvrant sur sa face inférieure (42) et un orifice de sortie (46) débouchant sur sa face supérieure, l'orifice d'entrée (45) étant alimenté en liquide sous pression.

8. Dispositif suivant la revendication 7 caractérisé en ce que l'alimentation en liquide sous pression du plateau déflecteur (25) est reliée aux moyens d'injection (15) du liquide à traiter.

9. Dispositif suivant l'une des revendications 7 ou 8 caractérisé en ce que le plateau déflecteur (25) comporte au moins trois canaux (40), dont l'axe de symétrie (zz'), en sortie du plateau (25), forme avec la face supérieure (44) de celui-ci un angle (β) égal au plus à 30°.

10. Dispositif suivant la revendication 9 caractérisé en ce que les orifices d'entrée (45) et de sortie (46) des canaux (40) sont régulièrement répartis angulairement sur des cercles de rayons respectifs (r') et (r) centrés au centre (O) du plateau déflecteur (25), et la projection (aa') de l'axe de symétrie (zz') de chaque canal (40) sur le plateau déflecteur (25) passe par le milieu (D) d'un segment (BC) joignant les centres (B,C) respectifs des deux orifices de sortie (46) suivants, lorsque l'on se déplace dans le sens de rotation (T) du tourbillon.

11. Dispositif suivant l'une quelconque des revendications 7 à 10 caractérisé en ce que la partie inférieure de la chambre de rétention (17) est traversée, de façon étanche, par un tube axial (90), et la face inférieure (42) du plateau déflecteur (25) comporte un tube (94) dont le volume interne est en communication avec l'orifice d'entrée (45) dudit canal (40), de diamètre intérieur supérieur au diamètre extérieur du tube (90), de façon à permettre un coulissement axial de ces deux tubes l'un par rapport à l'autre, des moyens d'étanchéité (96) assurant, entre eux, une étanchéité au liquide, une vis axiale (98) est fixée à la face inférieure (42) du plateau déflecteur (25) et se visse dans un élément fileté (100) solidaire de la paroi interne du tube (90), en permettant une libre circulation du liquide de part et d'autre de celui-ci, ce dispositif comportant des moyens d'alimentation (102) en liquide sous pression de l'intérieur du tube (90), des moyens d'étanchéité (104) étant prévus entre le tube (90) et la vis (98), en aval des moyens d'alimentation en liquide sous pression (108), et l'extrémité inférieure de la vis (98) comporte des moyens d'entraînement en rotation (106).

12. Dispositif suivant l'une des revendications 7 à 11 caractérisé en ce que ledit orifice (40) comporte des moyens d'alimentation d'au moins un produit de traitement à mélanger avec le liquide.

13. Dispositif suivant l'une quelconque des revendications précédentes caractérisé en ce que la longueur L de l'enceinte (1) est égale à environ cinq fois son diamètre interne (d), le diamètre (d1) de la conduite d'injection (15) est environ le quart du diamètre interne (d) de l'enceinte (1), le diamètre (d2) du tube de sortie (9) est égal au quart du diamètre interne (d) de l'enceinte (1), la distance entre la petite base du tronc de cône (11) de l'élément régulateur de flux (10) et la partie supérieure de l'enceinte (1) est égale à la moitié du diamètre interne (d) de celle-ci, le diamètre (f) de la partie cylindrique (13) prolongeant vers le bas le tronc de cône (11) est égal au diamètre interne de l'enceinte moins vingt millimètres et la course longitudinale (c) du plateau déflecteur (25) est égale à trente millimètres.

14. Procédé de purification d'un liquide par voie biologique caractérisé en ce qu'il consiste à alimenter en liquide à purifier une cuve de contact (124), ou réacteur biologique, contenant des micro-organismes fixés sur un support, à soutirer ce liquide de la cuve de contact (124) et à l'injecter sous pression dans un dispositif séparateur de particules suivant l'une quelconque des revendications 1 à 13, à séparer dans celui-ci les particules et les supports de micro-organismes contenus dans le liquide, à les recueillir dans une chambre de rétention (17), à les réinjecter dans la cuve de contact (124), et à extraire le liquide traité et purifié du séparateur.

15. Procédé suivant la revendication 14 caractérisé en ce que l'on met en action le séparateur de particules de façon intermittente.

16. Dispositif destiné à assurer la purification d'un liquide par voie biologique du type mettant en oeuvre des micro-organismes fixés sur un support, caractérisé en ce qu'il comprend une cuve de contact (124), ou réacteur biologique, contenant lesdits micro-organismes, dans laquelle débouche une canalisation (122,142) d'arrivée du liquide à traiter et/ou purifier, cette cuve de contact (124) comportant une canalisation de sortie (136) et des moyens d'injection (134) propres à pulser à l'intérieur d'un dispositif de séparation de particules suivant l'une quelconque des revendications 1 à 13 le liquide à traiter et/ou à purifier soutiré de la cuve de contact (124), la chambre de rétention (17) dudit dispositif séparateur de particules comportant des moyens permettant d'envoyer dans la cuve de contact (124) les particules et les supports contenant les micro-organismes séparés du liquide au cours du fonctionnement du dispositif séparateur.

17. Dispositif suivant la revendication 16 caractérisé en ce que la cuve de contact (124) est constituée d'un bac dont la partie supérieure est ouverte à l'air libre.

18. Dispositif suivant la revendication 17 caractérisé en ce que la canalisation (142) d'arrivée du liquide à traiter et/ou à purifier est reliée, par une dérivation (144), à une canalisation de distribution (140) et le tube (9) de sortie du séparateur de particules par lequel est extrait le liquide traité et/ou purifié est relié par une seconde dérivation (146) à la même canalisation de distribution (140) disposée en aval de la première.

## Claims

1. Device for separating particles contained in a liquid to be treated, comprising a cylindrical enclosure (1) open at its lower end or base, this enclosure (1) being provided with single means (15) for injecting the liquid to be treated, oriented tangentially with respect to its inner wall so as to create a forced swirl flow of the liquid in the enclosure (1) taking along the particles contained in the liquid to be treated, deflector means (25) disposed at the base of the enclosure (1) and intended to produce a central ascending swirl flow of the treated liquid, an axial outlet tube (9), disposed in the upper part of the enclosure (1) and opening downstream of the injection means (15), extended downwardly by a flow regulating element (10) formed, from upstream to downstream, by a downwardly tapered truncated part (11) extended by a cylindrical part (13) whose outer diameter is smaller than the inner diameter of the cylindrical enclosure (1), so as to create therebetween a flow stream (14) of annular section, characterized in that the deflector means are constituted by a plane plate (25) concentric to the enclosure (1), whose lower face is of diameter at least equal to the inner diameter of the latter and whose upper face is disposed near the lower open end of the enclosure (1), so as to form therebetween an annular space open to the outside, in order to allow a direct centrifugal ejection of the particles contained in the liquid, the plate (25) comprising means for adjusting its longitudinal position making it possible to alter and adjust the height of said annular space, a retention chamber (17), in exclusive communication with the enclosure (1) when the separator is operating, surrounds the base of the enclosure (1) and the plane plate (25) so as to collect the particles ejected through said annular space.

2. Device according to Claim 1, characterized in that the diameter of the plate (25) is larger than the inner diameter of the enclosure (1).

3. Device according to one of Claims 1 and 2, characterized in that the width of the annular space included between the inner wall of the cylindrical enclosure (1) and the outer wall of the cylindrical part (13) of the flow regulating element (10) is of the order of one third of the inner radius of the cylindrical enclosure (1).

4. Device according to one of the preceding Claims, characterized in that the top of the truncated part (11) of the flow regulating element (10) lies substantially at the level, in the longitudinal direction (yy'), of the part most downstream of the outlet orifice of the injection means (15).

5. Device according to one of the preceding Claims, characterized in that the sections of passage of the injection means (15) and of the annular-section flow stream (14) are identical.

6. Device according to one of the preceding Claims, characterized in that the injection means are constituted by a tubular element (15) fast with the cylindrical enclosure (1), of which the inner conduit (12) opens out in the enclosure by an orifice (12a), located in line with a half of inner conduit (12) included between the axis of symmetry of said conduit and the outermost part thereof.

7. Device according to any one of the preceding Claims, characterized in that the deflector plate (25) is traversed by at least one channel (40) comprising an inlet orifice (45) opening on its lower face (42) and an outlet orifice (46) opening out on its upper face, the inlet orifice (45) being supplied with liquid under pressure.

8. Device according to Claim 7, characterized in that the supply of the deflector plate (25) with pressurized liquid is connected to the means (15) for injecting the liquid to be treated.

9. Device according to one of Claims 7 or 8, characterized in that the deflector plate (25) comprises at least three channels (40) of which the axis of symmetry (zz'), on leaving the plate (25), forms with the upper face (44) thereof an angle (β) equal at the most to 30°.

10. Device according to Claim 9, characterized in that the inlet (45) and outlet (46) orifices of the channels (40) are regularly distributed angularly over circles of respective radii (r') and (r) centred at the centre (O) of the deflector plate (25), and the projection (aa') of the axis of symmetry (zz') of each channel (40) on the deflector plate (25) passes through the middle (D) of a segment (BC) joining the respective centres (B, C) of the following two outlet orifices (46), when one moves in the direction of rotation (T) of the swirl.

11. Device according to any one of Claims 7 to 10, characterized in that the lower part of the retention chamber (17) is hermetically traversed by an axial tube (90), and the lower face (42) of the deflector plate (25) comprises a tube (94) whose inner volume is in communication with the inlet orifice (45) of said channel (40), with inner diameter greater than the outer diameter of the tube (90), so as to allow axial slide of these two tubes with respect to each other, sealing means (96) ensuring therebetween a liquid-tightness, an axial screw (98) is fixed on the lower face (42) of the deflector plate (25) and is screwed in a threaded element (100) fast with the inner wall of the tube (90), allowing free circulation of the liquid on either side thereof, this device comprising means (102) for supplying pressurized liquid from inside the tube (90), sealing means (104) being provided between the tube (90) and the screw (98), downstream of the pressurized liquid supply means (108), and the lower end of the screw (98) comprises means (106) for driving in rotation.

12. Device according to one of Claims 7 to 11, characterized in that said orifice (40) comprises means for supplying at least one treatment product to be mixed with the liquid.

13. Device according to any one of the preceding Claims, characterized in that the length L of the enclosure (1) is equal to about five times its inner diameter (d), the diameter (d1) of the injection conduit (15) is about a quarter of the inner diameter (d) of the enclosure (1), the diameter (d2) of the outlet tube (9) is equal to a quarter of the inner diameter (d) of the enclosure (1), the distance between the small base of the frustum of cone (11) of the flow regulator element (10) and the upper part of the enclosure (1) is equal to half the inner diameter (d) of the latter, the diameter (f) of the cylindrical part (13) extending the frustum of cone (11) downwardly is equal to the inner diameter of the enclosure less twenty millimeters and the longitudinal stroke (c) of the deflector plate (25) is equal to thirty millimeters.

14. Process for purifying a liquid by biological means, characterized in that it consists in supplying liquid to be purified to a contact vat (124), or biological reactor, containing micro-organisms fixed on a support, in drawing off this liquid from the contact vat (124) and in injecting it under pressure in a particle separator device according to any one of Claims 1 to 13, in separating therein the particles and the micro-organism supports contained in the liquid, in collecting them in a retention chamber (17), in reinjecting them in the contact vat (124), and in extracting the liquid treated and purified from the separator.

15. Process according to Claim 14, characterized in that the particle separator is set in action intermittently.

16. Device intended to ensure purification of a liquid by biological means, of the type employing micro-organisms fixed on a support, characterized in that it comprises a contact vat (124), or biological reactor, containing said micro-organisms, in which opens out a pipe (122, 142) for admission of the liquid to be treated and/or purified, this contact vat (124) comprising an outlet pipe (136) and injection means (134) adapted to pulsate inside a particle separation device according to any one of Claims 1 to 13, the liquid to be treated and/or purified drawn off from the contact vat (124), the retention chamber (17) of said particle separator device comprising means for sending in the contact vat (124) the particles and supports containing the micro-organisms separated from the liquid in the course of functioning of the separator device.

17. Device according to Claim 16, characterized in that the contact vat (124) is constituted by a tank of which the upper part is open to the open air.

18. Device according to Claim 17, characterized in that the pipe (142) for admission of the liquid to be treated and/or purified is connected, by a by-pass (144), to a distribution pipe (140) and the outlet tube (9) of the particle separator via which the treated and/or purified liquid is extracted, is connected by a second by-pass (146) to the same distribution pipe (140) disposed downstream of the first.

## Patentansprüche

1. Vorrichtung zum Trennen von Teilchen, die in einer zu behandelnden Flüssigkeit enthalten sind, aufweisend einen zylindrischen Mantel (1), der an seinem unteren Ende oder seiner Basis offen ist, wobei dieser Mantel (1) mit einer bestimmten Einspritzeinrichtung (15) für die zu behandelnde Flüssigkeit versehen ist, die in Bezug auf ihre Innenfläche tangential derart ausgerichtet ist, daß ein gesteuerter Wirbelstrom der Flüssigkeit im Mantel (1) erzeugt wird, welcher gesteuerte Wirbelstrom die in der zu behandelnden Flüssigkeit enthaltenen Teilchen mitnimmt, eine Ablenkeinrichtung (25), die an der Basis des Mantels (1) angeordnet ist und dazu bestimmt ist, einen aufsteigenden zentralen Wirbelstrom der behandelten Flüssigkeit zu erzeugen, ein axiales Austrittsrohr (9), das im oberen Abschnitt des Mantels angeordnet ist und sich stromab der Einspritzeinrichtung (15) öffnet, die sich nach unten durch ein Strömungsregelungselement (10) fortsetzt, das von stromaufwärts nach stromabwärts einen kegelstumpfartigen Abschnitt (11) bildet, der sich nach unten ausweitet und durch einen zylindrischen Abschnitt (13) eines kleineren Außendurchmessers als der Innendurchmesser des zylindrischen Mantels (1) derart fortsetzt, daß dazwischen ein Strömungsgang (14) ringförmigen Querschnitts erzeugt wird,
dadurch gekennzeichnet, daß die Ablenkeinrichtung aus einer im Mantel (1) konzentrisch angeordneten flachen Platte (25) gebildet ist, deren untere Fläche einen Durchmesser hat, der mindestens dem Innendurchmesser des Mantels gleich ist, und deren Oberseite in der Nähe des unteren offenen Endes des Mantels (1) derart angeordnet ist, daß dazwischen ein ringförmiger, nach außen offener Raum erzeugt wird, um ein direktes zentrifugales Ausstoßen der in der Flüssigkeit enthaltenen Teilchen zu gestatten, wobei die Platte (25) eine Einrichtung zur Regelung ihrer Längsposition aufweist, die es gestattet, die Höhe des ringförmigen Raums zu ändern und zu regeln, wobei eine Rückhaltekammer (17), die ausschließlich mit dem Mantel (1) in Verbindung ist, wenn die Trennvorrichtung in Betrieb ist, die Basis des Mantels (1) und die flache Platte (25) derart umgibt, daß die durch den ringförmigen Raum ausgestoßenen Teilchen aufgefangen werden.

2. Vorrichtung nach Anspruch 1, dadurch gekennzeichnet, daß der Durchmesser der Platte (25) größer als der Innendurchmesser des Mantels (1) ist.

3. Vorrichtung nach einem der Ansprüche 1 und 2, dadurch gekennzeichnet, daß die Breite des ringförmigen Raums zwischen der Innenfläche des zylindrischen Mantels (1) und der Außenfläche des zylindrischen Abschnitts (13) des Strömungsregelungselements (10) die Größe von einem Drittel des Innenradius des zylindrischen Mantels (1) hat.

4. Vorrichtung nach einem der vorangehenden Ansprüche, dadurch gekennzeichnet, daß die Spitze des kegelstumpfartigen Abschnitts (11) des Strömungsregelungselements (10) in Längsrichtung (yy') im wesentlichen auf der Höhe des am weitesten stromabwärts gelegenen Abschnitts der Austrittsöffnung der Einspritzeinrichtung (15) liegt.

5. Vorrichtung nach einem der vorangehenden Ansprüche, dadurch gekennzeichnet, daß die Strömungsquerschnitte der Einspritzeinrichtung (15) und des Strömungsgangs ringförmigen Querschnitts (14) identisch sind.

6. Vorrichtung nach einem der vorangehenden Ansprüche, dadurch gekennzeichnet, daß die Einspritzeinrichtung aus einem rohrförmigen Element (15) gebildet ist, das mit dem zylindrischen Mantel (1) fest verbunden ist und dessen Innenleitung (12) in den Mantel durch eine Öffnung (12a) mündet, die in der Verlängerung einer Hälfte der Innenleitung (12), enthalten zwischen der Symmetrieachse der Leitung und ihrem am weitesten außen liegenden Abschnitt, gelegen ist.

7. Vorrichtung nach einem der vorangehenden Ansprüche, dadurch gekennzeichnet, daß die Ablenkplatte (25) von mindestens einem Kanal (40) durchquert ist, der eine Einlaßöffnung (45), die auf dessen Unterseite (42) mündet, und eine Austrittsöffnung (46) aufweist, die auf dessen Oberseite mündet, wobei die Einlaßöffnung (45) mit unter Druck stehender Flüssigkeit gespeist ist.

8. Vorrichtung nach Anspruch 7,
dadurch gekennzeichnet, daß die Speisung der Ablenkplatte (25) mit unter Druck stehender Flüssigkeit mit der Einspritzeinrichtung (15) der zu behandelnden Flüssigkeit verbunden ist.

9. Vorrichtung nach einem der Ansprüche 7 oder 8,
dadurch gekennzeichnet, daß die Ablenkplatte (25) mindestens drei Kanäle (40) aufweist, deren Symmetrieachse (zz') am Ausgang der Platte (25) mit deren Oberseite (44) einen Winkel (β) bildet, der höchstens gleich 30° ist.

10. Vorrichtung nach Anspruch 9, dadurch gekennzeichnet, daß die Einlaß- (45) und Anstrittsöffnungen (46) der Kanäle (40) regelmäßig winklig auf Kreisen jeweiliger Radien (r') und (r) verteilt sind, die um den Mittelpunkt (0) der Ablenkplatte (25) zentriert sind, und die Projektion (aa') der Symmetrieachse (zz') jedes Kanals (40) auf die Ablenkplatte (25) durch die Mitte (D) eines Segments (BC) verläuft, wobei die jeweiligen Mittelpunkte (B, C) der beiden nachfolgenden Austrittsöffnungen (46) verbunden werden, wenn man sich in der Drehrichtung (T) des Wirbels fortbewegt.

11. Vorrichtung nach einem der Ansprüche 7 bis 10, dadurch gekennzeichnet, daß der untere Abschnitt der Rückhaltekammer (17) dicht von einem axialen Rohr (90) durchquert ist, und die Unterseite (42) der Ablenkplatte (25) ein Rohr (94) aufweist, dessen Innenvolumen mit der Einlaßöffnung (45) des Kanals (40), die einen größeren Innendurchmesser als der Außendurchmesser des Rohrs (90) hat, derart in Verbindung steht, daß ein axiales Gleiten dieser beiden Rohre aufeinander zu gestattet ist, wobei eine Dichteinrichtung (96) dazwischen eine Dichtheit gegenüber Flüssigkeit gewährleistet, eine axiale Schraube (98) an der Unterseite (42) der Ablenkplatte (25) befestigt ist und in einem schraubbaren Element (100) eingeschraubt ist, das mit der Innenfläche des Rohrs (90) fest verbunden ist, indem eine freie Zirkulation der Flüssigkeit beiderseits von diesem gestattet ist, wobei diese Vorrichtung eine Einrichtung (102) zur Speisung mit unter Druck stehender Flüssigkeit aus dem Inneren des Rohrs (90) aufweist, wobei eine Dichteinrichtung (104) zwischen dem Rohr (90) und der Schraube (98) stromab der Einrichtung (108) zur Speisung mit unter Druck stehender Flüssigkeit vorgesehen ist, und das untere Ende der Schraube (98) eine Einrichtung zum Indrehungversetzen (106) aufweist.

12. Vorrichtung nach einem der Ansprüche 7 bis 11, dadurch gekennzeichnet, daß die Öffnung (40) eine Einrichtung zur Speisung mit mindestens einem zu behandelnden Produkt, das mit der Flüssigkeit zu mischen ist, aufweist.

13. Vorrichtung nach einem der vorangehenden Ansprüche, dadurch gekennzeichnet, daß die Länge L des Mantels (1) gleich etwa fünfmal seines Innendurchmessers (d) ist, der Durchmesser (d1) der Einspritzleitung (15) ungefähr ein Viertel des Innendurchmessers (d) des Mantels (1) ist, der Durchmesser (d2) des Austrittsrohrs (9) gleich dem Viertel des Innendurchmessers (d) des Mantels (1) ist, der Abstand zwischen der kleinen Grundlinie des Kegelstumpfes (11) des Strömungsregelungselements (10) und dem oberen Abschnitt des Mantels (1) gleich der Hälfte des Innendurchmessers (d) des Mantels ist, der Durchmesser (f) des zylindrischen Abschnitts (13), der nach unten den Kegelstumpf (11) fortsetzt, gleich dem Innendurchmesser des Mantels minus zwanzig Millimeter und der Längshub (c) der Ablenkplatte (25) gleich 30 Millimeter ist.

14. Verfahren zur Reinigung einer Flüssigkeit auf biologischem Weg, dadurch gekennzeichnet, daß es darin besteht, eine Kontaktküvette (124) oder ein biologisches Reaktionsgefäß, die auf einem Träger fixierte Mikroorganismen enthalten, mit zu reinigender Flüssigkeit zu speisen, diese Flüssigkeit von der Kontaktküvette (124) abzuziehen und sie unter Druck in eine Teilchentrennvorrichtung nach einem der Ansprüche 1 bis 13 zu spritzen, in der Teilchentrennvorrichtung die Teilchen und die in der Flüssigkeit enthaltenen Mikroorganismen-Träger zu trennen, sie in der Rückhaltekammer (17) aufzufangen, sie in die Kontaktküvette (124) wiedereinzuspritzen und die von der Trennvorrichtung behandelte und gereinigte Flüssigkeit zu extrahieren.

15. Verfahren nach Anspruch 14, dadurch gekennzeichnet, daß die Teilchentrennvorrichtung intermittierend betätigt wird.

16. Vorrichtung, die dazu bestimmt ist, die Reinigung einer Flüssigkeit auf biologischem Weg des Typs zu gewährleisten, der auf einem Träger fixierte Mikroorganismen einsetzt, dadurch gekennzeichnet, daß sie eine Kontaktküvette (124), oder ein biologisches Reaktionsgefäß, aufweist, die die Mikroorganismen enthalt und in die eine Zufuhrrohrleitung (122, 142) der zu behandelnden und/oder zu reinigenden Flüssigkeit mündet, wobei diese Kontaktküvette (124) eine Auslaßrohrleitung (136) und eine Einspritzeinrichtung (134) aufweist, die geeignet ist, in das Innere einer Teilchentrennvorrichtung nach einem der Ansprüche 1 bis 13 die zu behandelnde und/oder zu reinigende Flüssigkeit pulsierend einzuführen, die von der Kontaktküvette (124) abgezogen ist, wobei die Rückhaltekammer (17) der Teilchentrennvorrichtung eine Einrichtung aufweist, die es gestattet, in die Kontaktküvette (124) die Teilchen und die Träger einzuleiten, die die Mikroorganismen enthalten, die von der Flüssigkeit im Verlauf des Betriebs der Trennvorrichtung getrennt worden sind.

17. Vorrichtung nach Anspruch 16, dadurch gekennzeichnet, daß die Kontaktküvette (124) aus einem Gefäß gebildet ist, dessen oberer Abschnitt nach außen offen ist.

18. Vorrichtung nach Anspruch 17, dadurch gekennzeichnet, daß die Zufuhrrohrleitung (142) für die zu behandelnde und/oder zu reinigende Flüssigkeit mittels einer Abzweigeinrichtung (144) mit einer Verteilungsrohrleitung (140) verbunden ist, und das Auslaßrohr (9) der Teilchentrennvorrichtung, durch das die behandelte und/oder gereinigte Flüssigkeit extrahiert wird, ist mittels einer zweiten Abzweigeinrichtung (146) mit derselben Verteilungsrohrleitung (140), die stromab der ersten angeordnet ist, verbunden.
